# EUROPEAN PATENT APPLICATION

(11) **EP 2 574 026 A1**
(43) Date of publication of application: **27.03.2013**
(21) Application number: 12185280.0
(22) Date of filing: 20.09.2012
(51) Int. Cl.: H04M 1/725, G06Q 10/10, H04M 19/04, H04M 1/57

(54) **System and method for managing transient notifications using sensors**

(30) Priority: 23.09.2011 US 201113243696
(71) Applicant: Research In Motion Limited, Waterloo, ON N2L 3W8 (CA)
(72) Inventor: Kyprianou, Nikos, Mississauga, Ontario L4W 0B5 (CA)
(74) Representative: Bryn-Jacobsen, Caelia

(57) **Abstract**

Disclosed herein are systems, methods, and non-transitory computer-readable storage media (160) for managing transient notifications using sensors (192). A system identifies (200) a set of notifications to be presented to a user on a device (100) and determines via sensors (192) whether the user will likely receive and process communications or other separate events associated with the set of notifications. A composite notification is generated based on the set of notifications. Based on the determination, the system presents the composite notification (206) to the user on a device (100). The composite notification (206) can be of the same type as the set of notifications, a different type or a hybrid version. The composite notification can be delayed based on the determination. The transient and/or persistent original notifications that were to be sent are associated with missed calls, voicemail messages, email messages, text messages, calendar events, tasks, system notifications, and software updates.

## Description

### BACKGROUND

### 1. Technical Field

The present disclosure relates to computing devices and more specifically to a system and method of managing transient and/or persistent notifications presented to users via a device.

### 2. Introduction

Electronic devices can present notifications to users in response to receiving one of a missed call, a voicemail message, an email message, a text message, a system notification, and a software update. For example, when an email is received on a mobile device, the device can present an audible sound or cause the device to vibrate for 1 second. Notifications can be transient or persistent. A transient notification can be presented for a short period of time and generally does not require the user to acknowledge the notification. This is the case with many notifications where once the notification is presented and completed (transient), there is nothing else that is expected from the device. The user may or may not check the email message that is associated with the transient notification.

A persistent notification can require the user to acknowledge the notification by taking an action, such as hitting an enter key on a keyboard associated with the device. If the user is not able to process such a notification when it is presented, it can persist for some time until the user finally is able to interact with the notification. A problem encountered with transient and/or persistent notifications is that conventional systems do not provide a way to determine if the notification was presented at a time when a user can process the transient notification.

Another problem also exists with transient and/or persistent notifications. For example, assume a user is on a flight and must turn off a device that receives emails and SMS messages. During the flight, 20 emails are queued to be transmitted to the device when it reconnects with the network. Upon landing, the user turns on the device. In some instances, a transient notification can be presented for each email. Thus, there are numerous transient notifications received at once. The device may vibrate if set on a vibration mode for 10 or 20 seconds causing an annoyance on the part of the user. Thus, what is needed in the art, is an improved method and system for handling transient and/or persistent notifications.

### SUMMARY

Additional features and advantages of the disclosure will be set forth in the description which follows, and in part will be obvious from the description, or can be learned by practice of the herein disclosed principles. The features and advantages of the disclosure can be realized and obtained by means of the instruments and combinations particularly pointed out in the appended claims. These and other features of the disclosure will become more fully apparent from the following description and appended claims, or can be learned by the practice of the principles set forth herein.

Disclosed are systems, methods, and non-transitory computer-readable storage media for managing transient and/or persistent notifications. A system configured to practice the method identifies transient notifications at a first time that are to be presented to a user on a device at a later time. For example, if an email message is received at a network node which will be delivered to a handheld device at a first time, the system will generate a transient notification which will cause the device to vibrate to notify the user of the email. Each transient notification is associated with a category, including categories for missed calls, voicemail messages, email messages, text messages, calendar items, tasks, system notifications and software updates. Any separate event that can be tracked or identified on the device could be considered. A transient notification can be generated each time an event on the device occurs that requires informing the user, such as missed calls, voicemail messages, calendar events, tasks, received messages, system notifications and software updates. Any event can apply and this is not an inclusive list. There may be situations where a batch of messages are queued up and have not been sent, or are going to be sent in a serial fashion with a short amount of time between message, such as one message every 5 seconds will be transmitted to the device. If 20 messages are in the queue, each message may have an associated transient and/or persistent notification.

The transient notifications associated with a number of messages can be analyzed to generate a composite transient notification that represents multiple transient notifications. The composite transient notification can relate to the categories associated with each transient notification. The system can determine, via one or more sensors whether the user will process a communication associated with the composite transient notification if the composite transient notification is presented to the user at a later time, to yield a determination. Based on the determination, the system can process the composite transient notification. An example of a sensor may be a forward facing camera on a tablet device or computer screen that will sense whether the user is facing the device and is likely to process a received email. For example, if a user is not sitting at his or her computer, then presenting a transient notification of a new email is useless since the user will miss it.

When the system determines that the user will likely receive, view or hear the composite transient notification and thus process the communications associated with the composite transient notification, the system can present the composite transient notification to the user. When the system determines that the user will not process the communication, the system can generate a composite persistent notification and present the persistent notification to the user, generate an audible version of the composite transient notification or generate a delayed version of the composite transient notification.

Thus, the present disclosure focuses on two aspects of transient/persistent notifications that are associated with separate communications. The first aspect is processing a group of transient notifications yet to be presented to the user to generate a composite transient notification or a composite persistent notification or a hybrid of the two. The next aspect relates to utilizing the ability of a sensor or sensors to receive data about the user and analyze or predict that when the composite notification is presented, the user will be able to recognize the composite transient notification and then access the associated communication.

### BRIEF DESCRIPTION OF THE DRAWINGS

In order to describe the manner in which the above-recited and other advantages and features of the disclosure can be obtained, a more particular description of the principles briefly described above will be rendered by reference to specific embodiments thereof which are illustrated in the appended drawings. Understanding that these drawings depict only exemplary embodiments of the disclosure and are not therefore to be considered to be limiting of its scope, the principles herein are described and explained with additional specificity and detail through the use of the accompanying drawings in which:

FIG. 1 illustrates an example system embodiment;

FIG. 2 illustrates an exemplary managing transient notifications method embodiment;

FIG. 3 illustrates a traditional transient notification method embodiment;

FIG. 4 illustrates receiving multiple transient notifications;

FIG. 5 illustrates processing a composite transient notification; and

FIG. 6 illustrates delaying a composite transient notification.

### DETAILED DESCRIPTION

Various embodiments of the disclosure are discussed in detail below. While specific implementations are discussed, it should be understood that this is done for illustration purposes only. A person skilled in the relevant art will recognize that other components and configurations may be used without parting from the spirit and scope of the disclosure.

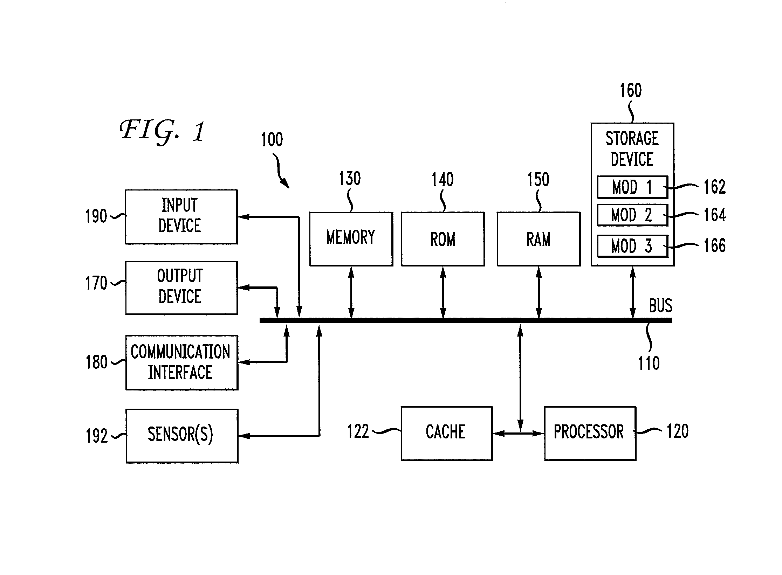

The present disclosure addresses the need in the art for managing transient notifications using a sensor. A system, method and non-transitory computer-readable media are disclosed which manage transient notifications using a sensor. A brief introductory description of a basic general purpose system or computing device in FIG. 1 which can be employed to practice the concepts is disclosed herein. A more detailed description of managing transient notifications using a sensor will then follow.

With reference to FIG. 1, an exemplary system 100 includes a general-purpose computing device 100, including a processing unit (CPU or processor) 120 and a system bus 110 that couples various system components including the system memory 130 such as read only memory (ROM) 140 and random access memory (RAM) 150 to the processor 120. The system 100 can include a cache 122 of high speed memory connected directly with, in close proximity to, or integrated as part of the processor 120. The system 100 copies data from the memory 130 and/or the storage device 160 to the cache 122 for quick access by the processor 120. In this way, the cache provides a performance boost that avoids processor 120 delays while waiting for data. These and other modules can control or be configured to control the processor 120 to perform various actions. Other system memory 130 may be available for use as well. The memory 130 can include multiple different types of memory with different performance characteristics. It can be appreciated that the disclosure may operate on a computing device 100 with more than one processor 120 or on a group or cluster of computing devices networked together to provide greater processing capability. The processor 120 can include any general purpose processor and a hardware module or software module, such as module 1 162, module 2 164, and module 3 166 stored in storage device 160, configured to control the processor 120 as well as a special-purpose processor where software instructions are incorporated into the actual processor design. The processor 120 may essentially be a completely self-contained computing system, containing multiple cores or processors, a bus, memory controller, cache, etc. A multi-core processor may be symmetric or asymmetric.

The system bus 110 may be any of several types of bus structures including a memory bus or memory controller, a peripheral bus, and a local bus using any of a variety of bus architectures. A basic input/output (BIOS) stored in ROM 140 or the like, may provide the basic routine that helps to transfer information between elements within the computing device 100, such as during start-up. The computing device 100 further includes storage devices 160 such as a hard disk drive, a magnetic disk drive, an optical disk drive, tape drive or the like. The storage device 160 can include software modules 162, 164, 166 for controlling the processor 120. Other hardware or software modules are contemplated. The storage device 160 is connected to the system bus 110 by a drive interface. The drives and the associated computer readable storage media provide nonvolatile storage of computer readable instructions, data structures, program modules and other data for the computing device 100. In one aspect, a hardware module that performs a particular function includes the software component stored in a non-transitory computer-readable medium in connection with the necessary hardware components, such as the processor 120, bus 110, display 170, and so forth, to carry out the function. The basic components are known to those of skill in the art and appropriate variations are contemplated depending on the type of device, such as whether the device 100 is a small, handheld computing device, a desktop computer, or a computer server.

Although the exemplary embodiment described herein employs the hard disk 160, it should be appreciated by those skilled in the art that other types of computer readable media which can store data that are accessible by a computer, such as magnetic cassettes, flash memory cards, digital versatile disks, cartridges, random access memories (RAMs) 150, read only memory (ROM) 140, a cable or wireless signal containing a bit stream and the like, may also be used in the exemplary operating environment. Non-transitory computer-readable storage media expressly exclude media such as energy, carrier signals, electromagnetic waves, and signals per se.

To enable user interaction with the computing device 100, an input device 190 represents any number of input mechanisms, such as a microphone for speech, a touch-sensitive screen for gesture or graphical input, keyboard, mouse, motion input, speech and so forth. An output device 170 can also be one or more of a number of output mechanisms known to those of skill in the art. In some instances, multimodal systems enable a user to provide multiple types of input to communicate with the computing device 100. The communications interface 180 generally governs and manages the user input and system output. There is no restriction on operating on any particular hardware arrangement and therefore the basic features here may easily be substituted for improved hardware or firmware arrangements as they are developed.

Sensor(s) 192 represent any kind of sensor such as a front facing camera to sense whether a user is at the device, an audible sensor to determine whether a user is speaking, a touch sensor to determine whether the user is typing or using a touch sensitive screen, a motion sensor to determine whether the user is gesturing or moving a hand or object, a light sensor, a temperature sensor, a gyroscope, an elevational sensor, a GPS, and so forth. Any data that can be sensed by the device is represented by sensor(s) 192.

For clarity of explanation, the illustrative system embodiment is presented as including individual functional blocks including functional blocks labeled as a "processor" or processor 120. The functions these blocks represent may be provided through the use of either shared or dedicated hardware, including, but not limited to, hardware capable of executing software and hardware, such as a processor 120, that is purpose-built to operate as an equivalent to software executing on a general purpose processor. For example the functions of one or more processors presented in FIG. 1 may be provided by a single shared processor or multiple processors. (Use of the term "processor" should not be construed to refer exclusively to hardware capable of executing software.) Illustrative embodiments may include microprocessor and/or digital signal processor (DSP) hardware, read-only memory (ROM) 140 for storing software performing the operations discussed below, and random access memory (RAM) 150 for storing results. Very large scale integration (VLSI) hardware embodiments, as well as custom VLSI circuitry in combination with a general purpose DSP circuit, may also be provided.

The logical operations of the various embodiments are implemented as: (1) a sequence of computer implemented steps, operations, or procedures running on a programmable circuit within a general use computer, (2) a sequence of computer implemented steps, operations, or procedures running on a specific-use programmable circuit; and/or (3) interconnected machine modules or program engines within the programmable circuits. The system 100 shown in FIG. 1 can practice all or part of the recited methods, can be a part of the recited systems, and/or can operate according to instructions in the recited non-transitory computer-readable storage media. Such logical operations can be implemented as modules configured to control the processor 120 to perform particular functions according to the programming of the module. For example, FIG. 1 illustrates three modules Mod1 162, Mod2 164 and Mod3 166 which are modules configured to control the processor 120. These modules may be stored on the storage device 160 and loaded into RAM 150 or memory 130 at runtime or may be stored as would be known in the art in other computer-readable memory locations.

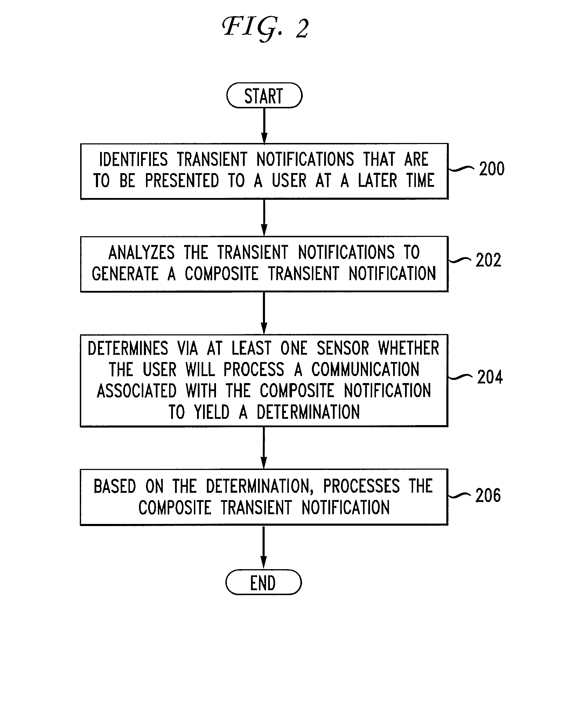

Having disclosed some components of a computing system, the disclosure now turns to FIG. 2, which illustrates managing transient and/or persistent notifications presented to a user device. The user device that is contemplated is any device that can receive and process the transient/persistent notifications such as tablet computers, handheld devices, laptops, desktop computers, and so forth. The general system in FIG. 1 represents hardware associated with all these types of devices and one of skill would recognize variations of the structure for any particular device. For the sake of clarity, the method is discussed in terms of an exemplary system 100 as shown in FIG. 1 configured to practice the method. The steps outlined herein are exemplary and can be implemented in any combination thereof, including combinations that exclude, add, or modify certain steps.

It is also noted that throughout the disclosure, reference is made to transient notifications, notifications and persistent notifications. These are two different types of notifications and have different characteristics. However, the principles disclosed herein with respect to generating a composite notification, modifying the notification to be converted from one type to another or to a hybrid, and so forth, generally apply. Therefore, wherever specific examples of a particular type of notification are discussed, they can expressly be also applied to another type of notification according to the scope of this disclosure.

A system 100 practicing the method identifies transient notifications on a device at a first time that are to be presented to a user at a second time (200), the second time being later than the first time. A transient notification is available for a short period of time and generally does not require the user to acknowledge viewing, hearing or processing the notification. Each transient notification can have a type associated with it, the type being associated with different categories. Categories can include missed calls, voicemail messages, email messages, text messages, system notifications and software updates. The system 100 can associate a transient notification with each event on a device such as receiving a voicemail, email message, text message, system notifications and software updates. System notifications can include notifications for calendar events, event reminders, alarms, low battery and so forth. Transient notifications are only available for access to the user for a predetermined period of time, such as two minutes. Once the predetermined period of time has passed, the transient notification is no longer accessible to the user. The transient period of time may be very short such as a 2 second vibration notifying the user of an email message or a brief notice on a computer screen with a quiet but audible beep. A problem exists where the user is not at the device and can miss the notification.

In one example, often when a calendar event is schedule for 15 minutes away, a transient notification will be presented. But if the user was not at her desk 15 minutes before the meeting, but sits down 10 minutes before the meeting, the notification will have been missed. This can be problematic for a user that does not process a transient notification but has a need for the information, such as receiving notification of a voicemail or text message.

Another problem exists in which when the user is not capable of receiving the transient and/or persistent notifications, such as because they are away from their desk or on a flight and the queue of messages has grown, that the system often presents multiple transient notifications which can become annoying. For example, the user may get a batch of 20 emails each with a transient notification. Often, at a desktop computer set to provide transient notifications for each email, the user, even at their desk, will see email notification after email notification which can be annoying. In some cases a persistent notification may remain displayed for a long time before the user sees it and responds. Next is a discussion of a solution to this problem.

After the system 100 identifies notifications at a first time, the notifications are analyzed to generate a composite notification representing the notifications (202). For example, the composite notification may be a single vibration transient notification representing 20 incoming email messages, which if processed normally would cause the device to receive 20 different vibration transient notifications. The system can generate the composite notification based on the associated types of notifications. For example, the queue of notifications can include some transient type notifications which are associated with emails and some persistent notifications associated with voicemails. The composite can be of one type or another, or a hybrid, depending on at least one of data from the sensor(s) 192, an analysis of the notifications, a user profile and preferences, or other external data.

In one aspect, prior to the second time, the system determines via at least one sensor 192 whether the user will process a communication associated with the composite notification if the composite notification is presented to the user at the second time to yield a determination (204). The determination can be positive indicating that the user will likely process the communications associated with the composite notification. The determination can be negative indicating that the user will not process the communication at that time. Based on the determination, the system 100 can process the composite notification (206). The disclosed method allows a user to receive one composite notification representing multiple events instead of receiving a transient notification for each event.

The group of notifications that are analyzed can be of any type. For example, the group can include one transient notification and one persistent notification. Based on the analysis, the system can generate one composite transient notification that represents both types of notifications.

If the group of notifications includes 10 transient notifications and two persistent notifications, then the system can generate two composite notifications, one for the transient notification subgroup and one for the persistent notification subgroup. For example, if the two persistent messages include one message asking the user to confirm that they want to shut down their browser and another message confirming a system reboot because of a software update, the system may generate a single composite notification which only asks for a single click to confirm that the user wants to shut down their browser and reboot.

If the 10 transient notifications represent 6 email messages and 4 voicemail messages, then two composite notifications can be presented which indicate to the user at least one email message is waiting and at least one voicemail message. Since the composite message usually represents multiple messages, the system can also convert from one type to another in the composite notification. For example, for 10 transient notifications to be processed, the system can convert from transient to persistent and present a persistent composite notification, and vice versa. Thus, the persistent notification may be a notice that "You have 10 email messages waiting - please click to confirm."

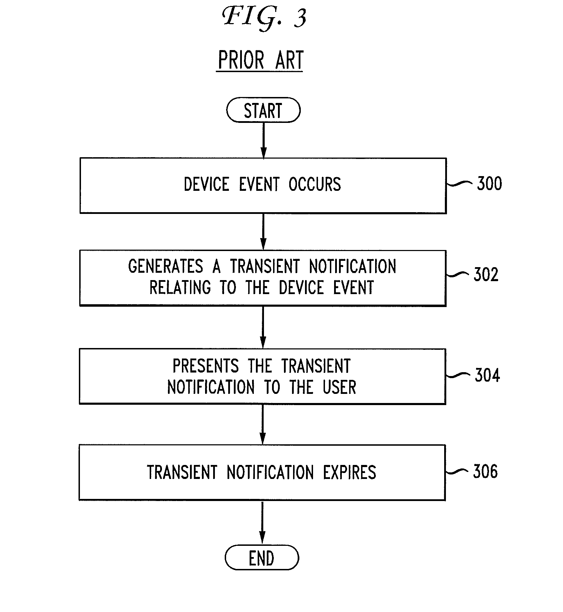

Traditionally, a user receives a transient notification for each device event such as receiving an email message, text message, calendar event, voicemail, missed call, etc. FIG. 3 illustrates a traditional method of presenting transient notifications to a user. A device event such as receiving a voicemail occurs (302) and a traditional transient notification system generates a transient notification relating to the device event (304), the voicemail. The transient notification is presented to the user (306) for a predetermined period of time and the transient notification expires (308) whether or not the user has processed the transient notification. The traditional method can be problematic for a user because transient notifications last only for a short period of time. If a user does not process a transient notification, the information is lost to the user.

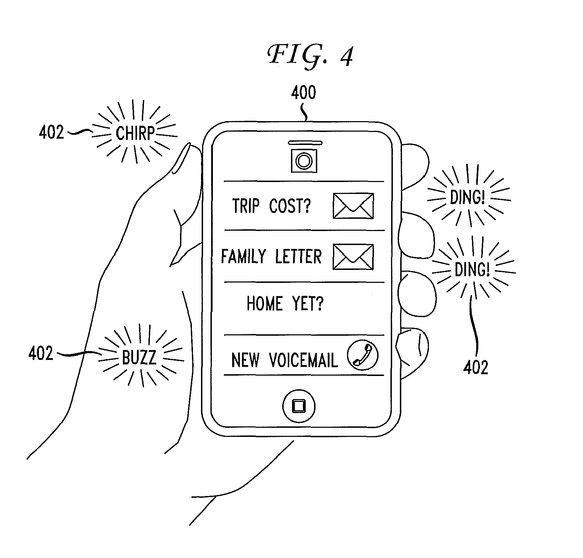

Generating a composite notification utilizing the method disclosed herein is advantageous when a user does not want to miss a transient notification and when a user wants to receive a digest of notifications, such as when transient notifications are generated on a device for events that occur when the device is powered off and multiple transient notifications are delivered immediately after the device is powered on. FIG. 4 illustrates a user device 400 receiving multiple transient notifications when the device is powered on. For example, a user can power off his device during a flight. After the flight, when the user powers on his device, he receives multiple transient notifications for each device event in the form of audible dings, chirps and device vibrations 402 indicating that he has received several emails, voicemails and text messages during the flight. Many users would prefer to receive one composite transient notification notifying them of the various communications received during the flight when the device is powered back on. Thus, rather than receiving all of the various notifications, the system presents a single composite notification, whether it be a chirp, vibration, visual display and so forth, that represents a group of transient and/or persistent notifications associated with multiple messages.

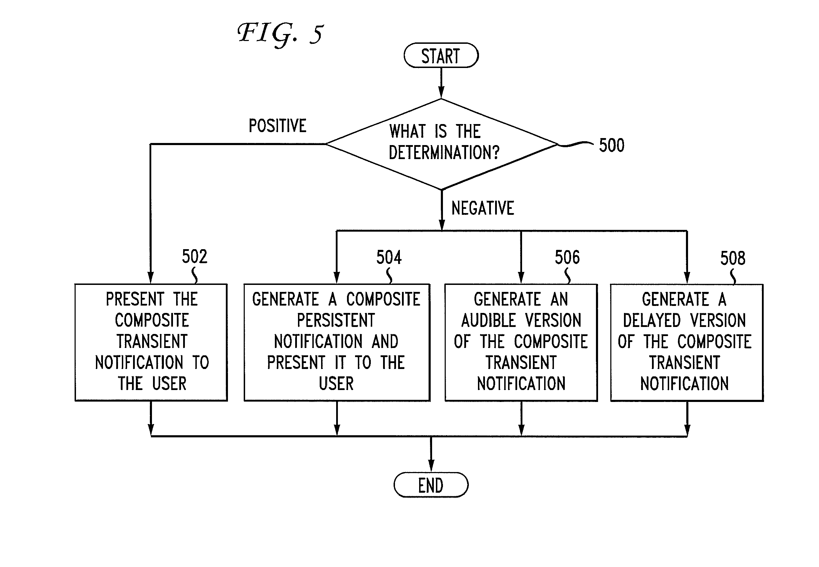

The system 100 can process a composite notification in several ways. FIG. 5 illustrates the various ways that the composite notification is processed. For a positive determination (500), meaning that the sensor determines that the user is likely to receive the notification and process the communication, the system 100 can present the composite notification to the user at the second time (502), the second time being later than the first time. The length of time between the first time and the second time can be a short period of time such as a few minutes or a longer period of time such as hours or days. The system 100 determines via a sensor 192 that the user is available to receive the composite notification. Presenting the composite notification to the user can include displaying the notification on the display of the device, vibrating the device, playing an audio tone via a speaker associated with the device or any combination or other means of providing the notification to the user via the device such as displaying a notification on the display of the device and vibrating the device simultaneously.

For a negative determination (500), i.e., that the sensor 192 determines that the user is not available for presenting the composite notification, the system 100 can generate a composite persistent notification based on the composite transient notification and present the persistent notification to the user (504) at a current time or at a later time. The composite persistent notification can persist on the user's device until the user acknowledges the persistent notification. Similar to presenting a composite transient notification, presenting a composite persistent notification can include displaying the persistent notification on the display of the device, vibrating the device, playing an audio tone via a speaker associated with the device or any combination or other means of providing the persistent notification to the user via the device. Utilizing persistent notifications is beneficial to a user because the user does not lose valuable information as is possible when transient notifications are utilized. A composite persistent notification can persist until the user acknowledge the notification. The persistent composite notification can also still be transient but for a longer time. In other words, it may persistent for longer than a brief moment as would be the case for a displayed notification for 10 minutes.

Alternately, the system can generate an audible version of the composite notification (506) such as an announcement, vibration, noise, etc. and can communicate the audible notification to the user such that the user hears the notification. Another option is for the system to generate a delayed version of the composite notification (508) to be received by the user at a later time. In one example, a sensor 192 at a user's desktop computer can recognize that the user is in the room but not at the user's desk. In this case, the system can analyze incoming transient notifications for emails. Rather than continuing to present a brief small iconic display and barely audible beep for each incoming email, the system may cease and generate a composite notification which includes a louder, longer beep and a larger display noting that "10 emails have arrived." In this manner, the user, who is at the other end of the room, is more likely to hear the louder audible beep and be able to see the larger notification that 10 emails have arrived. The larger notification can be displayed for a longer period of time or be persistent where the user must respond. The system can also receive an audible response from the user such as listening for an "ok" and processing that audible data from the user as a response to the composite notification. In this manner, the data from the sensors 192 can affect the structure, timing, size, volume, persistent/transient nature, of the composite notification based on that data.

Such sensor data includes, but is not limited to, whether the user is sitting at their computer or device, whether the user is in the same room as the device, whether the user is driving, whether the user is currently on the phone or talking with someone, the time day, patterns of the user, i.e., do they ever answer emails from 10-11AM, whether the user is at home or work, what room the user is in (kitchen, family room, bedroom, office, hallway), user preferences and parameters, and so forth. Any of this data can be used to process a group of transient and/or persistent notifications to arrive at a transient, persistent or hybrid composite notification of incoming messages.

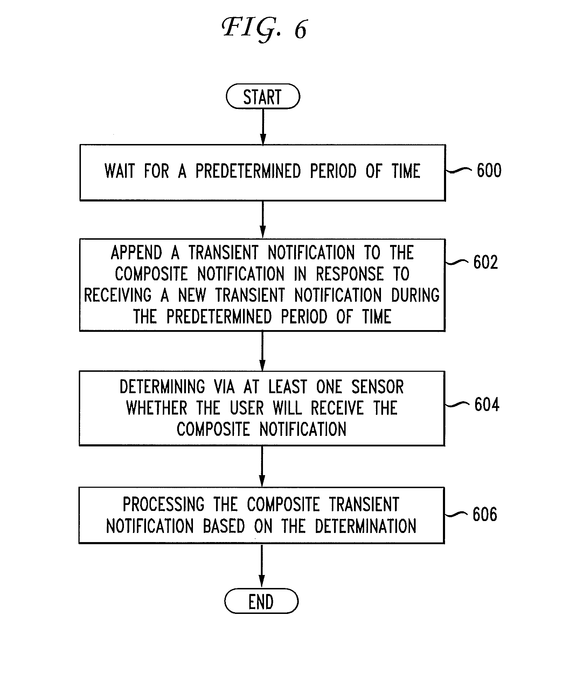

FIG. 6 illustrates delaying sending a composite notification to a user. After a first time in which a notification should be sent to the user in the traditional method, the system 100 can wait for a predetermined period of time, for example two minutes or one hour depending on user preference (600). The system can append a transient/persistent notification to the composite notification in response to receiving a new transient notification during the predetermined amount of time (602). The system can determine, via at least one sensor 192 whether the user will receive the composite transient notification if it is presented to the user to yield a determination (604). And based on the determination, the system can process the composite notification (606) by performing at least one of presenting the composite transient notification to the user, generating a composite persistent notification and presenting the composite persistent notification to the user, generating an audible version of the composite transient notification and generating a delayed version of the composite transient notification.

In another example, the system may wait to complete generating the composite notification until the system is ready to deliver it. In other words, if the sensor data causes the system to determine at noon that a composite notification should be delivered to the user device at 3PM, the system can then begin to monitor and analyze the queue of notifications associated with separate events (i.e., the notification is for a separate email, text message, voicemail, calendar event, software update, etc.). Shortly before 3PM, if the scheduled time for the composite notification is still 3PM, the system can then analyze all of the notifications received up until that time and then process the composite notification, which includes delivering the notification to the device. If a composite notification is already generated, and during a predetermined period of time, an additional notification arrives, the system can append the additional notification to the composite notification or modify the composite notification. For example, if at 2:55PM, the composite notification is generated and shortly to be delivered notifying the user of 12 emails waiting, and the system receives a new email at 2:57, the system can modify (or not) the composite notification, and delete or cancel the additional notification. In this case, rather than receiving the additional notification plus the composite notification, the user device presents only the composite notification (or a modified version thereof representing the appended additional notification or a changed version of the original composite notification).

The system 100 determines if the user can process the composite notification utilizing one or more sensors 192 on the device which are activated prior to the determination of whether the user can process the composite transient notification. A sensor can include a camera, an accelerometer, an infrared sensor, a laser, acoustic sensor, microphone, a proximity sensor, a graffiti sensor, a motion sensor, a GPS device, a gyroscope, a touch sensor or any other sensor that can provide information associated with the user or a configuration or orientation of the device. The camera can be part of or associated with the computing device such as a camera in a PDA or a camera attached to a display of the device. The system 100 can use one or any combination of sensors to determine if the user can process the composite transient notification such as using a camera and a proximity sensor. The system 100 can require that one or more sensors detect the presence of the user. For example, the system can make a positive determination indicating that the user is available to process the composite transient notification when the user is facing the camera, and can make a negative determination indicating that the user is unavailable when the user is not facing the camera. The system can make a positive determination utilizing a proximity sensor by detecting the presence of the user and a negative determination by not detecting the presence of the user. Alternately, the system can make a positive determination when there is no ongoing event on the calendar and can make a negative determination when there is an event scheduled on the calendar. The system can make a positive determination when the microphone is not in use for a period of time and can make a negative determination when the microphone is in use. Any combination of sensors to determine if the user can process the composite transient notification is possible.

Data from other devices besides the device that will present the composite notification can also provide data about the user. For example, a user's handheld device may provide data to a network node that generates and causes a composite notification to be presented on the user's desktop computer. Thus, an aspect of this disclosure includes receiving sensor data from at least one device that is not the device which will process the notifications. Furthermore, when analyzing notifications, the system may also switch the presentation of a composite notification or a transient and/or persistent notification from an initially intended device (i.e., the device that will receive the associated communication) to another device. In this manner, if a handheld device receives a voicemail message and the sensor recognizes that the user does not have their handheld device and will not receive the transient notification of the message, the system can also sense that the user is at their desktop (assuming the phone is in the car) and send a transient notification to their desktop notifying them of the voicemail on the cellphone. While this is not a "composite" notification it represents a modification of the notification given the data received from the sensor.

Embodiments within the scope of the present disclosure may also include tangible and/or non-transitory computer-readable storage media for carrying or having computer-executable instructions or data structures stored thereon. Such non-transitory computer-readable storage media can be any available media that can be accessed by a general purpose or special purpose computer, including the functional design of any special purpose processor as discussed above. By way of example, and not limitation, such non-transitory computer-readable media can include RAM, ROM, EEPROM, CD-ROM or other optical disk storage, magnetic disk storage or other magnetic storage devices, or any other medium which can be used to carry or store desired program code means in the form of computer-executable instructions, data structures, or processor chip design. When information is transferred or provided over a network or another communications connection (either hardwired, wireless, or combination thereof) to a computer, the computer properly views the connection as a computer-readable medium. Thus, any such connection is properly termed a computer-readable medium. Combinations of the above should also be included within the scope of the computer-readable media.

Computer-executable instructions include, for example, instructions and data which cause a general purpose computer, special purpose computer, or special purpose processing device to perform a certain function or group of functions. Computer-executable instructions also include program modules that are executed by computers in stand-alone or network environments. Generally, program modules include routines, programs, components, data structures, objects, and the functions inherent in the design of special-purpose processors, etc. that perform particular tasks or implement particular abstract data types. Computer-executable instructions, associated data structures, and program modules represent examples of the program code means for executing steps of the methods disclosed herein. The particular sequence of such executable instructions or associated data structures represents examples of corresponding acts for implementing the functions described in such steps.

Those of skill in the art will appreciate that other embodiments of the disclosure may be practiced in network computing environments with many types of computer system configurations, including personal computers, hand-held devices, multi-processor systems, microprocessor-based or programmable consumer electronics, network PCs, minicomputers, mainframe computers, and the like. Embodiments may also be practiced in distributed computing environments where tasks are performed by local and remote processing devices that are linked (either by hardwired links, wireless links, or by a combination thereof) through a communications network. In a distributed computing environment, program modules may be located in both local and remote memory storage devices.

The various embodiments described above are provided by way of illustration only and should not be construed to limit the scope of the disclosure. For example, the principles herein apply not only to a smartphone device but to other devices capable of receiving communications such as a laptop computer. Those skilled in the art will readily recognize various modifications and changes that may be made to the principles described herein without following the example embodiments and applications illustrated and described herein, and without departing from the spirit and scope of the disclosure.

Aspects and features of the present disclosure are set out in the following numbered items.
1. A method comprising:
   identifying (200) a plurality of notifications at a first time that are to be presented on a device at a second time, wherein the second time is later than the first time;
   analyzing (202) the plurality of notifications to generate a composite notification representing the plurality of notifications, each notification of the plurality of notifications presenting one of a transient notification and a persistent notification that notify a user of the device of a separate event;
   receiving a determination (204, 206, FIG. 5) via at least one sensor (192) whether the user of the device will likely process a respective separate event associated with the composite notification if the composite notification is presented to the user at the second time, to yield a determination; and
   based on the determination (FIG. 5), processing the composite notification for presentation on the device.
2. The method of item 1, wherein the composite notification comprises one of a transient notification, a persistent notification and a hybrid notification (¶0039, ¶0041).
3. The method of any of the preceding items, wherein the composite notification differs in type from a type of the plurality of notifications (¶0035).
4. The method of any of the preceding items, wherein processing the composite notification further comprises performing at least one of presenting the composite notification to the user on the device, generating and presenting a composite persistent notification to the user on the device, generating and presenting an audible version of the composite transient notification to the user on the device, and generating and presenting a delayed version of the composite transient notification to the user on the device (¶0028, ¶0032,¶0040).
5. The method of any of the preceding items, wherein the plurality of notifications are only available for presenting to the user on the device for a predefined period of time and are presented to the user at the second time (¶0042).
6. The method of any of the preceding items, further comprising, if the determination is positive, presenting the composite transient notification to the user on the device at the second time (¶0042, FIG. 5, FIG. 6).
7. The method of any of the preceding items, further comprising, if the determination is negative, performing at least one of: generating and presenting a composite persistent notification to the user on the device, generating an audible version of the composite notification, and generating and presenting a delayed version of the composite notification (¶0042, FIG. 5, FIG. 6).
8. The method of item 1, further comprising associating a type of notification with each notification (¶0028).
9. The method of item 8, further comprising generating the composite notification based on the type of each notification (¶0031).
10. The method of any of items 8 and 9, wherein the type of notification comprises at least one of: missed calls, voicemail messages, email messages, text messages, calendar events, tasks, system notifications, and software updates (¶0028).
11. The method of any of the preceding items, wherein the at least one sensor (192) is at least one of a camera, a proximity sensor, an audible sensor, a touch sensor and a processor associated with the device (¶0044).
12. The method of any of the preceding items, wherein the at least one sensor is activated prior to the determination (¶0044).
13. The method of any of the preceding items, wherein the determination is positive when a user is facing a camera and the determination is negative when the user is not facing the camera (¶0044).
14. The method of any of the preceding items, wherein the determination is positive when a proximity sensor detects a presence of a user and the determination is negative when the proximity sensor does not detect the presence of the user (¶0044).
15. A system (FIG. 1) for carrying out the method according to any of the preceding items.

## Claims

1. A method comprising:
identifying (200) a plurality of notifications at a first time that are to be presented on a device at a second time, wherein the second time is later than the first time;
analyzing (202) the plurality of notifications to generate a composite notification representing the plurality of notifications, each notification of the plurality of notifications presenting one of a transient notification and a persistent notification that notify a user of the device of a separate event;
receiving a determination (204, 206) via at least one sensor (192) whether the user of the device will likely process a respective separate event associated with the composite notification if the composite notification is presented to the user at the second time, to yield a determination; and
based on the determination, processing the composite notification for presentation on the device.

2. The method of claim 1, wherein the composite notification comprises one of a transient notification, a persistent notification and a hybrid notification.

3. The method of any of the preceding claims, wherein the composite notification differs in type from a type of the plurality of notifications.

4. The method of any of the preceding claims, wherein processing the composite notification further comprises performing at least one of presenting the composite notification to the user on the device, generating and presenting a composite persistent notification to the user on the device, generating and presenting an audible version of the composite transient notification to the user on the device, and generating and presenting a delayed version of the composite transient notification to the user on the device.

5. The method of any of the preceding claims, wherein the plurality of notifications are only available for presenting to the user on the device for a predefined period of time and are presented to the user at the second time.

6. The method of any of the preceding claims, further comprising, if the determination is positive, presenting the composite transient notification to the user on the device at the second time.

7. The method of any of the preceding claims, further comprising, if the determination is negative, performing at least one of: generating and presenting a composite persistent notification to the user on the device, generating an audible version of the composite notification, and generating and presenting a delayed version of the composite notification.

8. The method of claim 1, further comprising associating a type of notification with each notification.

9. The method of claim 8, further comprising generating the composite notification based on the type of each notification.

10. The method of any of claims 8 and 9, wherein the type of notification comprises at least one of: missed calls, voicemail messages, email messages, text messages, calendar events, tasks, system notifications, and software updates.

11. The method of any of the preceding claims, wherein the at least one sensor (192) is at least one of a camera, a proximity sensor, an audible sensor, a touch sensor and a processor associated with the device.

12. The method of any of the preceding claims, wherein the at least one sensor is activated prior to the determination.

13. The method of any of the preceding claims, wherein the determination is positive when a user is facing a camera and the determination is negative when the user is not facing the camera.

14. The method of any of the preceding claims, wherein the determination is positive when a proximity sensor detects a presence of a user and the determination is negative when the proximity sensor does not detect the presence of the user.

15. A system for carrying out the method according to any of the preceding claims.
